# EUROPÄISCHE PATENTSCHRIFT

(11) **EP 1 981 728 B1**
(45) Veröffentlichungstag und Bekanntmachung des Hinweises auf die Patenterteilung: **28.09.2016**
(21) Anmeldenummer: 07704240.6
(22) Anmeldetag: 30.01.2007
(51) Int. Cl.: B60K 6/00

(54) **ÜBERWACHUNG FÜR EINEN HYBRIDANTRIEB**
MONITORING SYSTEM FOR A HYBRID DRIVE
SURVEILLANCE D'UN ENTRAINEMENT HYBRIDE

(30) Priorität: 31.01.2006 DE 102006004280
(43) Veröffentlichungstag der Anmeldung: 22.10.2008
(73) Patentinhaber: Robert Bosch GmbH, 70442 Stuttgart (DE)
(72) Erfinder: JUENEMANN, Thorsten, 71069 Sindelfingen (DE); NIEMANN, Holger, 71634 Ludwigsburg (DE)
(86) Internationale Anmeldenummer: PCT/EP2007/050888
(87) Internationale Veröffentlichungsnummer: WO 2007/088162

(56) Entgegenhaltungen:
- EP-A- 1 464 876
- US-A1- 2003 176 256
- US-B1- 6 336 063
- US-B1- 6 359 404

## Beschreibung

### Stand der Technik

Die Erfindung betrifft ein Verfahren zur kontinuierlichen Momentenüberwachung eines Hybridantriebs aus einer Brennkraftmaschine mit einem Motorsteuergerät und einem eigensicheren Elektroantrieb mit einem Steuergerät, wobei ein zulässiges Gesamtmoment mit der Summe aus einem Ist-Moment des Elektroantriebs und einem Ist-Moment der Brennkraftmaschine verglichen wird.

Derartige kontinuierliche Momentenüberwachungen werden eingesetzt, um eine mögliche Fehlfunktion eines Steuergeräts für einen Fahrzeugantrieb oder des Fahrzeugantriebs selber zum Schutz von Fahrzeuginsassen als auch des externen Verkehrs festzustellen. Wird eine Fehlfunktion festgestellt, wird eine Fehlerreaktion eingeleitet und das Fahrzeug in einen sicheren Fahrzeugzustand übergeführt. Zur Momentenüberwachung wird im Betrieb kontinuierlich aus einem Fahrzeugführerwunsch ein zulässiges Gesamt-Moment ermittelt und mit einem Gesamt-Ist-Moment des Antriebs verglichen. Bei einem Hybridantrieb aus einer Brennkraftmaschine und einem Elektroantrieb wird das Gesamt-Ist-Moment aus der Summe der Ist-Momente der Brennkraftmaschine und des Elektroantriebs ermittelt. Überschreitet die Summe der Ist-Momente der Brennkraftmaschine und des Elektroantriebs das zulässige Gesamt-Moment, wird ein Fehlersignal abgegeben und das Fahrzeug in einen sicheren Fahrzeugzustand übergeführt.

Die Bestimmung des Ist-Momentes der Brennkraftmaschine geschieht beim Otto-Motor aus Messwerten für die Luftmenge, den Lambdawert und den Zündwinkel. Bei einem Dieselmotor wird das Ist-Moment aus den Einspritzparametern Kraftstoffdruck, Ventil-Öffnungsdauer und Ventil-Schließdauer bestimmt. Das zulässige Gesamt-Moment wird aus dem Fahrpedalsignal, Daten aus Fahrerassistenzsystemen, Getriebedaten, Eingriffen des ESP und Verlustmomenten bestimmt.

Das zulässige Moment und das Ist-Moment einer Brennkraftmaschine werden zur Verbesserung der Funktionssicherheit mittels einer redundant ausgeführten Software aus redundant erfassten Eingangssignalen des Motorsteuergeräts der Brennkraftmaschine bestimmt. Nach dem Stand der Technik werden dabei Variable doppelt abgelegt, es findet eine zyklische Überprüfung der Speicher RAM und ROM statt und es ist eine Programmablaufkontrolle sowie ein Befehlstest vorgesehen. Wegen der umfangreichen Überwachungsmaßnahmen ist eine Implementierung der Software notwendig, die einen schnellen Programmablauf ermöglicht, um eine schnelle Reaktion der Momentenüberwachung auf Fehlfunktionen zu ermöglichen. Dies wird erreicht, indem die Variablen für das Ist-Moment der Brennkraftmaschine und für das zulässige Moment als relative Größen in Bezug auf das maximal mögliche Moment der Brennkraftmaschine ("Normierungsmoment") ausgedrückt werden. Typisch wird auf diese Weise der für eine Momentenüberwachung erforderliche ROM-Code um einen Faktor zwei bis vier gegenüber einer Implementierung mit absoluten Momenten verringert.

Das Ist-Moment des eigensicheren Elektroantriebs wird von dessen Steuergerät an das Motorsteuergerät der Brennkraftmaschine über eine abgesicherte Kommunikation weitergeleitet. Dabei wird der Wert des Soll-Moments des Elektroantriebs zusammen mit einem Diagnosestatus an das Motorsteuergerät der Brennkraftmaschine gemeldet. Da der Elektroantrieb eigensicher ist, sind Soll-Moment und Ist-Moment gleich, es sei denn, der Diagnosestatus zeigt an, dass eine Fehlfunktion des Elektroantriebs vorliegt.

Es ist Aufgabe der Erfindung, ein Verfahren bereitzustellen, das eine einfache Erweiterung der Momentenüberwachung für eine Brennkraftmaschine zu einer Momentenüberwachung für einen Hybridantrieb ermöglicht.

### Vorteile der Erfindung

Die Aufgabe wird dadurch gelöst, dass das zulässige Gesamt-Moment um das Ist-Moment des Elektroantriebs vermindert wird und ein zulässiges Moment der Brennkraftmaschine gebildet wird. Durch dieses Verfahren kann bestehende Software weitgehend weiter genutzt werden und muss nicht abgeändert werden. In der Motorsteuerung kann weitgehend mit auf das Maximal-moment der Brennkraftmaschine normierten Momenten gerechnet werden. Insbesondere in der Vergleichsstufe bleibt der Wertebereich der Momente bei Hybridantrieb gegenüber dem bei einer reinen Brennkraftmaschine erhalten. Somit ist eine Speicherplatz und Berechnungsdauer einsparende Programmierung möglich.

Wird das Ist-Moment des Elektroantriebs vom zulässigen Gesamt-Moment in einer Subtraktionsstufe im Motorsteuergerät der Brennkraftmaschine subtrahiert, kann die Motorsteuerung der Brennkraftmaschine und die darin enthaltene Programmierung bei der Erweiterung zur Überwachung des Hybridantriebs weitgehend unverändert bleiben. Dies erleichtert die Erstellung und Wartung der Programme für die Motorsteuerung, da eine Version für beide Antriebstypen benutzt werden kann. Das in der Subtraktionsstufe gebildete zulässige Moment der Brennkraftmaschine ist dabei dem bereits aus dem Betrieb als reine Brennkraftmaschine bekannten zulässigen Moment vergleichbar und kann mit dem Ist-Moment der Brennkraftmaschine verglichen werden.

### Zeichnung

Die Erfindung wird im Folgenden anhand der in den Figuren dargestellten Ausführungsbeispiele näher erläutert. Es zeigen:
Figur 1 schematisch eine kontinuierliche Momentenüberwachung für einen Hybridantrieb
Figur 2 eine Momentenüberwachung in der erfindungsgemäßen Ausführung.

### Beschreibung der Ausführungsbeispiele

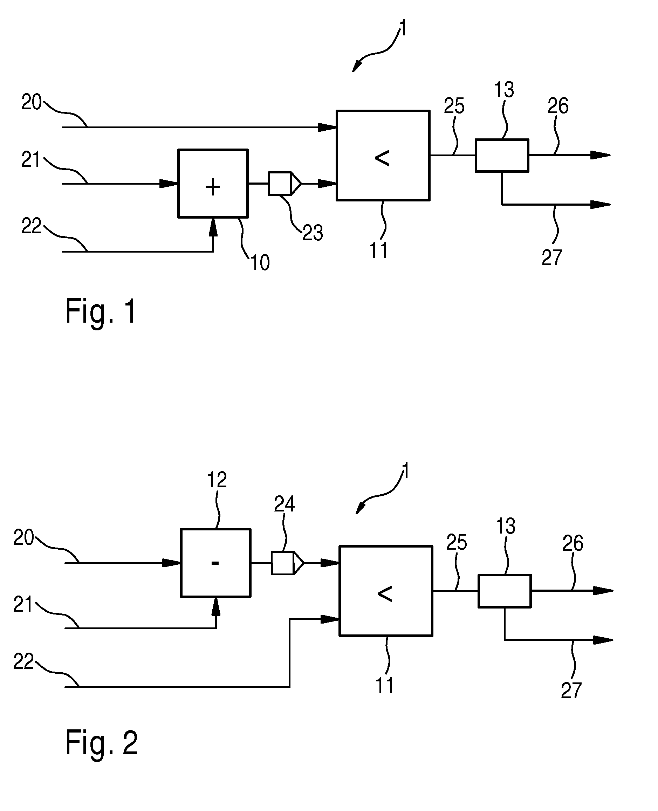

Figur 1 zeigt eine Momentenüberwachung 1 für einen Hybridantrieb aus einem Elektromotor und einer Brennkraftmaschine. Die Momentenüberwachung 1 besteht aus einer Summationsstufe 10, einer Vergleichsstufe 11 und einer Entscheidungsstufe 13. Ein Gesamt-Ist-Moment 23 wird in der Summationsstufe 10 aus einem Ist-Moment des Elektroantriebs 21 und einem Ist-Moment der Brennkraftmaschine 22 gebildet. Das Gesamt-Ist-Moment 23 wird in der Vergleichsstufe 11 mit einem zulässigen Gesamt-Moment 20 des Hybridantriebs verglichen, wobei die Vergleichsstufe 11 ein Vergleichssignal 25 abgibt, das anzeigt, ob das Gesamt-Ist-Moment 23 das zulässige Gesamt-Moment 20 übersteigt. In einem solchen Fall gibt die der Vergleichsstufe 11 nachgeordnete Entscheidungsstufe 13 eine Fehlersignal 26 ab und eine hier nicht dargestellte Motorsteuerung führt das Fahrzeug in einen sicheren Fahrzeugzustand über. Ist das Gesamt-Ist-Moment 23 kleiner als das zulässige Gesamt-Moment 20, gibt die Entscheidungsstufe 13 ein Freigabesignal 27 an die Motorsteuerung weiter, so dass der normale Fahrbetrieb fortgesetzt werden kann. Das maximal auftretende zulässige Gesamt-Moment 20 entspricht der Summe des maximalen Ist-Momente des Elektroantriebs 21 und des maximalen Ist-Moments der Brennkraftmaschine.

Figur 2 zeigt eine Momentenüberwachung 1 für einen Hybridantrieb in der erfindungsgemäßen Ausprägung. Die Momentenüberwachung 1 besteht aus einer Subtraktionsstufe 12, der Vergleichsstufe 11 und der Entscheidungsstufe 13. In der Subtraktionsstufe 12 wird vom zulässigen Gesamt-Moment 20 das Ist-Moment des Elektroantriebs 21 subtrahiert und so ein zulässiges Moment der Brennkraftmaschine 24 gebildet. Das zulässige Moment der Brennkraftmaschine 24 wird in der Vergleichsstufe 11 mit dem Ist-Moment der Brennkraftmaschine 22 verglichen und das Vergleichssignal 25 ausgegeben, das anzeigt, ob das zulässige Moment der Brennkraftmaschine 24 kleiner als das Ist-Moment der Brennkraftmaschine 22 ist. Zeigt das Vergleichssignal 25, dass das zulässige Moment der Brennkraftmaschine 24 kleiner als das Ist-Moment der Brennkraftmaschine 22 ist, wird durch die Entscheidungsstufe 13 das Fehlersignal 26 ausgelöst und das Fahrzeug in einen sicheren Fahrzeugzustand übergeführt. Im anderen Fall gibt die Entscheidungsstufe 13 das Freigabesignal 27 an die Motorsteuerung weiter, so dass der normale Fahrbetrieb fortgesetzt werden kann.

In der Momentenüberwachung 1 werden die Werte für die Größen für das zulässige Gesamt-Moment 20, das Ist-Moment des Elektroantriebs 21, das Ist-Moment der Brennkraftmaschine 22, das Gesamt-Ist-Moment 23 und das zulässige Moment der Brennkraftmaschine 24 als relative Werte in Bezug auf ein Maximal-Moment der Brennkraftmaschine ausgedrückt, da durch dieses Verfahren erheblich an Speicherplatz gespart werden kann. Bei einem Antrieb, der ausschließlich mit einer Brennkraftmaschine betrieben wird, treten daher Werte im Bereich 0% bis 100% auf. Wird jedoch in einem Hybridantrieb ein Elektroantrieb dazu genommen, kann das zulässige Gesamt-Moment 20 den Wert 100% überschreiten. Aufgrund der Speicherplatz sparenden Implementierung der Größen in der Software sind jedoch nur Werte bis 100% darstellbar. Ohne die erfindungsgemäße Ausführung würde somit das Moment des Hybridantriebs auf das Maximal-Moment der Brennkraftmaschine reduziert werden müssen. Durch die Subtraktion des Ist-Moments des Elektroantriebs 21 kann der Momentenvergleich in der Vergleichsstufe 11 zwischen dem zulässigen Moment der Brennkraftmaschine 24 und dem Ist-Moment der Brennkraftmaschine 22 erfolgen, die beide im Wertebereich 0% bis 100% liegen. Für den Hybridantrieb kann somit der Momentenvergleich und auch die Bestimmung des Ist-Moments der Brennkraftmaschine 22 aus der Motorsteuerung der Brennkraftmaschine unverändert übernommen werden. Das zulässige Gesamt-Moment 20 kann jedoch auch bei dem beschriebenen Verfahren Werte größer 100% annehmen, so dass die Speicherplatzersparnis hier nicht realisiert werden kann.

Eine durchgehend Speicherplatz sparende Implementierung der Momentenüberwachung 1 wäre denkbar, indem alle Größen auf die Summe der Maximal-Momente von Brennkraftmaschine und Elektroantrieb bezogen würden. Dies würde jedoch eine Überarbeitung der Berechnung des Ist-Moments der Brennkraftmaschine 22 bedeuten, wobei deren Motorsteuerung angepasst und verändert werden müsste. Insbesondere wäre dann auch das Maximal-Moment der Brennkraftmaschine nicht mehr mit dem Wert 100% belegt, was zu Komplikationen bei der Programmierung von Motorsteuerungen führen könnte, wenn parallel Motorsteuerungen für Hybridantriebe und reine Brennkraftmaschinen bearbeitet werden. Eine Einschränkung des Wertebereichs der Momente der Brennkraftmaschine würde weiterhin die Auflösung der Zahlenwerte der Größen verringern und somit zu Ungenauigkeiten führen.

## Patentansprüche

1. Verfahren zur kontinuierlichen Momentenüberwachung (1) eines Hybridantriebs aus einer Brennkraftmaschine mit einem Motorsteuergerät und einem eigensicheren Elektroantrieb mit einem Steuergerät, wobei ein zulässiges Gesamt-Moment (20) mit der Summe aus einem Ist-Moment des Elektroantriebs (21) und einem Ist-Moment der Brennkraftmaschine (22) verglichen wird, **dadurch gekennzeichnet, dass** das zulässige Gesamt-Moment (20) um das Ist-Moment des Elektroantriebs (21) vermindert wird und ein zulässiges Moment der Brennkraftmaschine (24) gebildet wird.

2. Verfahren nach Anspruch 1, **dadurch gekennzeichnet, dass** das Ist-Moment des Elektroantriebs (21) vom zulässigen Gesamt-Moment (20) in einer Subtraktionsstufe (12) im Motorsteuergerät der Brennkraftmaschine subtrahiert wird.

## Claims

1. Method for continuous torque monitoring (1) of a hybrid drive comprising an internal combustion engine with an engine control unit and an intrinsically safe electric drive with a control unit, a permissible overall torque (20) being compared with the sum of an actual torque of the electric drive (21) and an actual torque of the internal combustion engine (22), **characterized in that** the permissible overall torque (20) is reduced by the actual torque of the electric drive (21) and a permissible torque of the internal combustion engine (24) is formed.

2. Method according to Claim 1, **characterized in that** the actual torque of the electric drive (21) is subtracted from the permissible overall torque (20) in a subtraction stage (12) in the engine control unit of the internal combustion engine.

## Revendications

1. Procédé de surveillance de couple (1) en continu d'un entraînement hybride constitué d'un moteur à combustion interne avec un appareil de commande de moteur et d'un entraînement électrique à sécurité intrinsèque comprenant un appareil de commande, un couple total admissible (20) étant comparé à la somme d'un couple réel de l'entraînement électrique (21) et d'un couple réel du moteur à combustion interne (22), **caractérisé en ce que** le couple total admissible (20) est réduit du couple réel de l'entraînement électrique (21) et un couple admissible du moteur à combustion interne (24) est formé.

2. Procédé selon la revendication 1, **caractérisé en ce que** le couple réel de l'entraînement électrique (21) est soustrait du couple total admissible (20) dans une étape de soustraction (12) dans l'appareil de commande de moteur du moteur à combustion interne.
